Europäisches Patentamt

European Patent Office

Office européen des brevets

(11) Numéro de publication : **0 107 989**
**B1**

(12) **FASCICULE DE BREVET EUROPÉEN**

(45) Date de publication du fascicule du brevet :
04.03.87

(51) Int. Cl.⁴ : **G 02 B   6/38**

(21) Numéro de dépôt : **83401928.3**

(22) Date de dépôt : **30.09.83**

(54) Dispositif de montage de fibres optiques dans un embout.

(30) Priorité : 08.10.82 FR 8216905

(43) Date de publication de la demande :
09.05.84 Bulletin 84/19

(45) Mention de la délivrance du brevet :
04.03.87 Bulletin 87/10

(84) Etats contractants désignés :
DE GB IT

(56) Documents cités :
EP-A- 0 001 117
FR-A- 2 408 152
FR-A- 2 417 784
US-A- 4 132 461

(73) Titulaire : SOCAPEX
10 bis, quai Léon Blum
F-92153 Suresnes (FR)

(72) Inventeur : Parchet, Pierre
THOMSON-CSF SCPI 173, bld Haussmann
F-75379 Paris Cedex 08 (FR)
Inventeur : Bertho, Dominique
THOMSON-CSF SCPI 173, bld Haussmann
F-75379 Paris Cedex 08 (FR)

(74) Mandataire : Brullé, Jean et al
Service Brevets Bendix 44, rue François 1er
F-75008 Paris (FR)

Jouve, 18, rue St-Denis, 75001 Paris, France

## Description

La présente invention a pour objet un dispositif de montage de fibres optiques dans un embout.

On connaît du brevet français 2 487 528 un dispositif de montage de fibres optiques dans un embout, comportant une rainure en forme de V délimitée par des cales étalons et dans lequel des piges cylindriques sont alignées le long des flancs de la rainure en forme de V et maintenues en place par l'application d'un système de forces approprié. L'alignement des fibres de l'embout est alors réalisé en plaçant chacune d'entre elles entre deux piges cylindriques qui sont maintenues en position par un tampon présentant un profil en forme de V et venant en contact avec les fibres optiques. L'application d'un système de forces sur l'ensemble des piges cylindriques est difficile à obtenir de manière satisfaisante et par conséquent, les forces auxquelles sont soumises les fibres optiques disposées entre les piges cylindriques et produites par l'action du tampon les positionnant dans celles-ci sont difficiles à contrôler, étant donné qu'elles sont notamment très dépendantes de la position des piges cylindriques. Il en résulte que certaines fibres peuvent être exagérément écrasées, ce qui peut nuire à leur positionnement.

La présente invention a pour objet un dispositif de montage de fibres optiques dans un embout qui soit de structure plus simple que celui de l'art antérieur et dans lequel les forces auxquelles sont soumises les fibres optiques puissent être contrôlées avec précision.

L'invention concerne donc un dispositif de montage de fibres optiques dans un embout comprenant une embase comportant un moyen pour disposer l'embout dans une position de référence et une première rainure en forme de V destinée au positionnement desdites fibres optiques ainsi qu'une pièce d'appui ayant deux faces inclinées mutuellement et destinée à maintenir en position les fibres optiques, caractérisé en ce qu'il comporte une cale disposée au fond de ladite première rainure en forme de V et telle qu'elle délimite une première et une deuxième saignée chacune ayant une section en forme de V, chacune pouvant recevoir au moins une fibre optique et en ce que la pièce d'appui est telle qu'elle soit susceptible de venir en contact mécanique avec les fibres optiques, sans être toutefois en contact avec ladite cale, dans des conditions telles que la déformation éventuelle des fibres optiques soit suffisamment faible pour autoriser la précision de positionnement désirée des fibres dans l'embout.

Ladite cale peut avoir une section carrée, et être pourvue d'une arête chanfreinée disposée du côté opposé au fond du V.

Ladite cale peut être une pige cylindrique.

Selon une variante destinée au montage de quatre fibres optiques, la première et la deuxième saignée en forme de V reçoivent respectivement une deuxième et une troisième cale de manière à délimiter un groupe de quatre saignées secondaires en forme de V dont chacune peut recevoir une fibre optique. Au moins une desdites deuxième et troisième cales peut être une pige cylindrique.

Selon un mode de réalisation préféré, la face inférieure, qui contacte les fibres, de la pièce d'appui est divisée par au moins une saignée pour former des régions séparées correspondant chacune à au moins une fibre optique pour positionner celle-ci. Dans la variante du dispositif destinée au montage de quatre fibres optiques, la pièce d'appui peut comporter une région centrale correspondant à deux fibres optiques disposées dans deux saignées secondaires centrales, et deux régions latérales correspondant chacune à une fibre optique disposée dans une saignée secondaire latérale.

Selon une variante, au moins une région est en forme de triangle dont le sommet, tronqué, vient au niveau d'au moins une fibre optique.

Selon une variante, le dispositif selon l'invention est tel que les fibres optiques sont positionnées dans un même plan.

De manière connue en soi, le moyen pour disposer l'embout dans une position de référence peut être une deuxième rainure en forme de V dont le fond de la rainure est décalé par rapport au fond de la première rainure en forme de V.

La pièce d'appui peut être telle qu'elle vient en contact mécanique avec les bords de la première rainure en forme de V.

Selon une variante, la pièce d'appui est telle qu'elle puisse venir en contact mécanique avec les fibres optiques sans être en contact avec les bords de la première rainure en forme de V et un dispositif approprié applique une force calibrée sur les fibres. Dans ce cas, la pièce d'appui peut être moins précise.

L'invention sera mieux comprise à la lecture de la description qui va suivre, donnée à titre d'exemple non limitatif, en se reportant aux dessins ci-annexés où :

la figure 1a représente en perspective un mode de réalisation d'un dispositif suivant l'invention ;

la figure 1b représente un détail de la figure 1a en vue de face ;

la figure 1c représente l'embout de la figure 1a en vue de face ;

la figure 1d représente une coupe dans le plan des fibres, de l'embout de la figure 1a ;

les figures 2a et 2b représentent une variante de la figure précédente, plus particulièrement adaptée à un embout présentant un seul perçage pour le passage de deux fibres ;

les figures 3a et 3b représentent un mode de réalisation de l'invention adapté au positionnement de quatre fibres optiques ;

les figures 4 et 5 représentent des variantes des figures 1b et 3a respectivement.

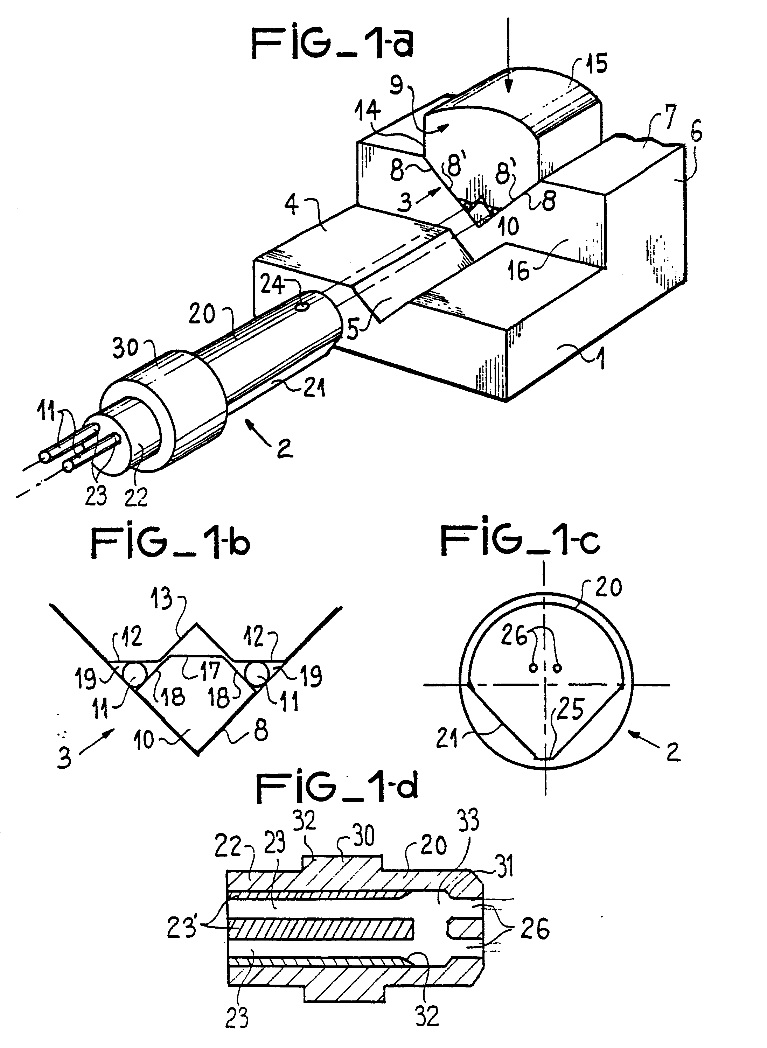

Sur la figure 1a, une embase 1 comporte une face plane inférieure 4 dans laquelle est ménagée une rainure 5 en forme de V susceptible de recevoir un contour correspondant 21 ménagé dans une partie cylindrique avant 20 d'un embout 2. L'invention s'applique en général à tout embout pouvant être orienté angulairement avec précision, par exemple un embout cylindrique pourvu d'une rainure de positionnement angulaire. L'embout 2 comporte à sa partie arrière 22 deux ouvertures 23 dont chacune reçoit une fibre optique 11 et une collerette centrale 30 permettant son montage dans un corps d'embout non représenté. L'embase 1 comporte également une surface plane supérieure 7 disposée en retrait par rapport à la surface plane inférieure 4 et reliée à celle-ci par une face verticale 16 formant butée. Dans la surface 7 est ménagée une rainure en forme de V 3 dont les parois sont repérées en 8. Au fond de la rainure 3, est disposée une cale calibrée 10 de section carrée. Cette cale calibrée définit de chaque côté un profil en forme de V dont une des parois est constituée par une paroi 8 de la rainure 3 et dont l'autre paroi est constituée par un des côtés 18 de la cale calibrée 10. Une pièce d'appui 9 présente une paroi supérieure 15 et deux faces latérales parallèles 14 se prolongeant vers le bas par deux plans inclinés 8' disposés de manière à correspondre au profil de la rainure 3. Les plans inclinés 8' ne se prolongent pas jusqu'à la partie inférieure du V 3, mais seulement jusqu'à une face horizontale 12 au centre de laquelle est ménagée une saignée 13 parallèle à l'axe de la rainure 3.

Comme on le voit mieux à la figure 1b, une fibre optique 11 est disposée dans le premier et le deuxième profil 19 en forme de V délimités par la rainure 3 dont les faces 8 peuvent faire entre elles un angle de 90° et la cale calibrée 10 et lorsque la pièce d'appui 15 est en position dans la rainure 3, chacune des deux portions du plan 12 vient en contact avec la fibre optique correspondante 11. La rainure 13 est réalisée de telle sorte que la pièce d'appui n'est pas en contact avec la cale calibrée 10. Pour faciliter cette absence de contact, la cale calibrée 10 présente une arête 17 chanfreinée disposée du côté opposé au fond de la rainure 3, la pièce d'appui 9 présentant la saignée longitudinale 13 au milieu de sa face inférieure 12. Dans ces conditions, la pièce d'appui 9 venant en butée sur les parois 8 de la rainure 3 en forme de V, la position du plan 12 est déterminée avec précision, ce qui, compte tenu des dimensions géométriques de la cale 10, permet de doser exactement l'effort subi par les fibres optiques 11 pour leur positionnement par placage au fond des V secondaires. En pratique, l'écrasement des fibres ainsi produit sera limité au maximum à quelques microns seulement, de manière à éviter de soumettre celles-ci à des contraintes produisant une déformation des fibres nuisibles à la précision du centrage.

A titre de variante, le plan 12 est tel qu'un jeu inférieur à 3 microns environ existe avec les fibres, celles-ci étant alors simplement guidées et non plaquées.

La figure 1c représente en vue de face l'embout 2. Les faces 21 du contour en forme de V se rejoignent par une face 25. Les fibres optiques 11 qui sont introduites par des ouvertures 23 en nombre égal à celui des fibres optiques de l'embout (ici 2) situées dans la partie cylindrique arrière 22 de l'embout, débouchent sur la face avant au niveau de deux ouvertures 26 qui, lorsque l'embout est positionné dans la rainure 5 en butée sur la face verticale 16, se trouvent respectivement en face des premier et deuxième profils 19 en forme de V. Les ouvertures 26 sont de préférence situées, comme représenté, dans le plan médian de l'embout.

La mise en place des fibres optiques dans l'embout est alors réalisée de la manière suivante (voir figure 1d). Les fibres optiques 11 sont introduites dans les ouvertures 23 de l'embout 2 ménagées dans une pièce rapportée 23' et qui ont un diamètre légèrement supérieur à celui des fibres optiques de telle sorte que d'une part elles puissent coulisser librement et que d'autre part les ouvertures 23 réalisent un pré-guidage axial des fibres. Les fibres 11 traversent ensuite une chambre 33 en communication avec l'extérieur de l'embout par une ouverture 24 (figure 1a) qui s'évase en 32 à partir des ouvertures 23 et qui fait fonction de réserve de colle et pénètrent dans la ou les ouvertures 26 dont le diamètre est également supérieur à celui des fibres. L'introduction des fibres dans les ouvertures 26 est facilitée par la présence des chanfreins 31. Les fibres optiques dépassant de la face avant de l'embout 2 sont ensuite positionnées dans les profils en forme de V 19 à l'aide de la pièce d'appui 9 et la colle est alors introduite par une ouverture 24 ménagée à l'avant de la partie supérieure de la partie cylindrique 20, ouverture 24 qui est en communication avec la chambre 33, de telle sorte que la colle qui pénètre dans la chambre de remplissage 33, et par le jeu des ouvertures 26 soit susceptible de maintenir les fibres en position. Le choix du diamètre 26 est de préférence tel que la colle pénètre par capillarité autour des fibres dans les ouvertures 26, sans toutefois s'écouler vers l'extérieur. Après séchage de la colle, les fibres sont coupées puis polies et l'embout est prêt à être utilisé.

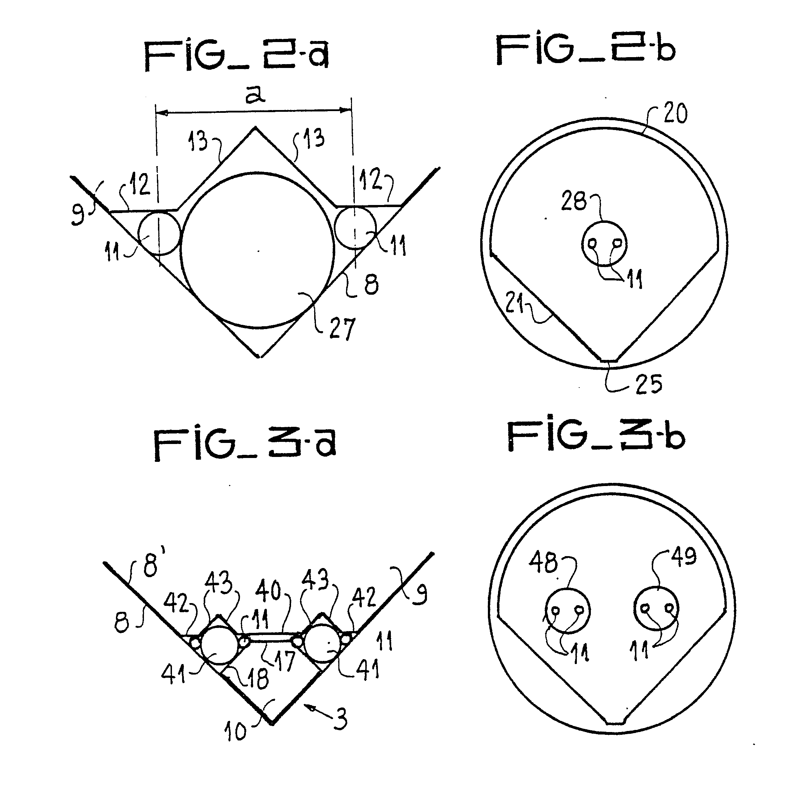

La figure 2a est une variante de la figure 1b, dans laquelle la cale calibrée 10 est remplacée par une pige cylindrique de précision 27. Cette solution convient particulièrement au cas où on veut diminuer l'entraxe entre les fibres 11. En effet, pour un entraxe a de 0,5 mm, et pour des fibres de 125 um de diamètre, le diamètre de la pige cylindrique 27 est nominalement de 0,39 mm. Dans cette gamme de dimensions, il serait assez difficile de réaliser une cale calibrée de la forme de la cale 10. Comme représenté à la figure 2b, un entraxe faible entre les fibres 11, par exemple de l'ordre de 0,5 mm, permet de faire déboucher celles-ci par une seule ouverture 28 disposée sur la face avant de l'embout 2. Dans ce cas de figure, et comme précédemment, les fibres sont introduites par deux ouvertures 23 ménagées à l'arrière de l'embout 2.

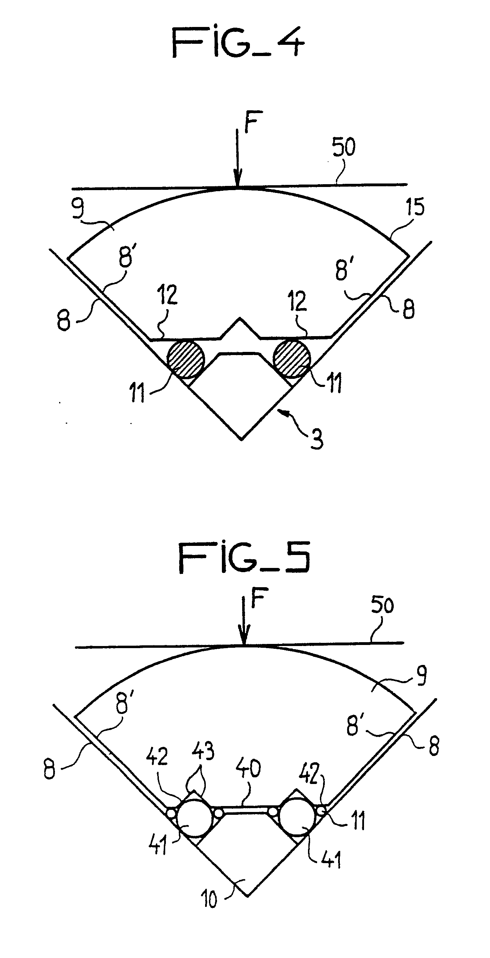

La figure 3a représente une variante permettant de disposer quatre fibres optiques dans un embout comportant sur sa face avant de préférence deux ouvertures 48 et 49 recevant chacune une paire de fibres optiques 11. On comprendra que ce mode de réalisation est également applicable au cas d'un embout comportant trois ou bien quatre ouvertures sur sa face avant. Une cale calibrée telle que 10, de dimensions appropriées, reçoit sur chacun de ses premier et second profils en forme de V une cale calibrée, ici une pige cylindrique 41. Chaque pige cylindrique 41 délimite des profils secondaires en forme de V dont chacun est tel qu'il puisse recevoir une fibre optique. La pièce d'appui 9 reposant sur les flancs 8 de la rainure 3, sa face inférieure comporte trois régions coplanaires, une région centrale 40 appuyant sur les deux fibres centrales 11, et deux régions latérales 42 appuyant sur les fibres optiques externes 11. A titre de variante, on peut, comme dans le cas précédent, laisser un léger jeu entre les régions 40 et 42 et les fibres. Les régions 40 et 42 sont séparées par des saignées 43 qui permettent à la pièce d'appui 9 de venir au contact des fibres optiques 11 sans toucher les piges cylindriques 41. On remarquera que les fibres optiques ont été représentées dans un plan, ce qui constitue une réalisation préférée, mais que les dimensions des pièces de l'assemblage peuvent être choisies de manière à obtenir une disposition différente des fibres optiques dans l'embout. De même, d'autres formes de cales calibrées peuvent être mises en œuvre.

Selon la figure 4, la pièce d'appui 9 est réalisée de telle sorte que, si elle venait en butée sur les parois 8 de la rainure 3 en forme de V, la position du plan 12 correspondrait à un écrasement théorique des fibres égal au minimum à quelques microns et au maximum à 20 microns environ. Autrement dit, la tolérance de fabrication de la pièce d'appui peut autoriser des valeurs comprises dans cette fourchette, évitant ainsi une trop grande précision dans la réalisation de la pièce d'appui 9. Dans ces conditions, la pièce d'appui 9 vient en contact avec les fibres 11 sans que ses deux faces 8' soient en butée sur les faces 8 du V constitué par la rainure 3 et la force d'appui sur les fibres 11 est limitée par un système de pression taré appliquant une pression sur les fibres (correspondant selon un exemple préféré de réalisation à une force de l'ordre de 500 grammes maximum pour une pièce d'appui 9 appuyant sur les fibres sur une longueur de 20 mm) telle que l'écrasement de celles-ci reste de l'ordre de quelques microns de manière à conserver une bonne précision d'alignement. Les faces 8' de la pièce d'appui 9 restent très voisines des faces 8 du V3.

Dans ce mode de réalisation, les faces 8 de la pièce d'appui 9 servent à limiter le basculement éventuel de la pièce d'appui 9 sous l'action de la force F appliquée suivant l'axe de la rainure 3. Le basculement peut en outre être largement contrecarré en donnant à la face supérieure 15 de la pièce d'appui 9 un profil cylindrique dont l'axe est confondu avec l'axe de symétrie des fibres et en appliquant la force F par l'intermédiaire d'une partie plane 50, ce qui permet de faire passer la force F par le plan médian des deux fibres.

La figure 5 représente la même conception que la figure 4, mais dans le cas où quatre fibres sont mises en œuvre.

Le dispositif selon l'invention permet de disposer jusqu'à quatre fibres optiques dans un embout de dimensions standard utilisé habituellement pour le centrage d'une seule fibre optique. Cette disposition est particulièrement avantageuse en ce sens que la réalisation de contours en forme de V tels que 21 dans un embout devient plus délicate au fur et à mesure que les dimensions de celui-ci augmentent.

**Revendications**

1. Dispositif de montage de fibres optiques (11) dans un embout (2), et comprenant une embase (1) comportant un moyen (5) pour disposer l'embout dans une position de référence et une première rainure (3) en forme de V destinée au positionnement desdites fibres optiques ainsi qu'une pièce d'appui (9) ayant deux faces (8') inclinées mutuellement et destinée à maintenir en position les fibres optiques (11), caractérisé en ce qu'il comporte une cale (10) disposée au fond de la première rainure (3) en forme de V et telle qu'elle délimite une première et une deuxième saignée chacune ayant une section (19) en forme de V, chacune pouvant recevoir au moins une fibre optique (11) et en ce que la pièce d'appui (9) est telle qu'elle soit susceptible de venir en contact mécanique avec les fibres optiques (11), sans être toutefois en contact avec ladite cale (10), dans des conditions telles que la déformation éventuelle des fibres optiques soit suffisamment faible pour autoriser la précision de positionnement désirée des fibres dans l'embout.

2. Dispositif selon la revendication 1, caractérisé en ce que ladite cale (10) a une section carrée.

3. Dispositif selon la revendication 2, caractérisé en ce que ladite cale (10) est pourvue d'une arête (17) chanfreinée disposée du côté opposé au fond du V.

4. Dispositif selon la revendication 1, caractérisé en ce que ladite cale calibrée est une pige cylindrique (27).

5. Dispositif selon l'une des revendications précédentes, caractérisé en ce que la première et la deuxième saignée (19) en forme de V reçoivent respectivement une deuxième et une troisième cale (41) de manière à délimiter un groupe de quatre saignées secondaires en forme de V dont chacune peut recevoir une fibre optique (11).

6. Dispositif selon la revendication 5, caractérisé en ce qu'au moins une des deuxième et troisième cales (41) est une pige cylindrique.

7. Dispositif selon l'une des revendications précédentes, caractérisé en ce que la face intérieure, qui contacte les fibres, de la pièce d'appui (9) est divisée par au moins une saignée pour former des régions séparées (12) correspondant chacune à au moins une fibre optique à positionner.

8. Dispositif selon l'une des revendications 5 ou 6 en combinaison avec la revendication 7, caractérisé en ce que la pièce d'appui (9) comporte une région centrale (40) correspondant à deux fibres optiques disposées dans deux saignées secondaires centrales et deux régions latérales (42) correspondant chacune à une fibre optique (11) disposée dans une saignée secondaire latérale.

9. Dispositif selon l'une des revendications 7 ou 8, caractérisé en ce qu'au moins une région (12, 40, 42) est en forme de triangle dont le sommet, tronqué, vient au niveau d'au moins une fibre optique (11).

10. Dispositif selon l'une des revendications précédentes, caractérisé en ce qu'il est tel que les fibres optiques (11) sont positionnées dans un même plan.

11. Dispositif selon l'une des revendications précédentes, caractérisé en ce que le moyen pour disposer l'embout dans une position de référence est une deuxième rainure (5) en forme de V dont le fond de la rainure est décalé par rapport au fond de la première rainure en forme de V (3).

12. Dispositif selon l'une des revendications précédentes, caractérisé en ce que la pièce d'appui (9) est telle qu'elle vient en contact mécanique avec les bords de la première rainure (3) en forme de V.

13. Dispositif selon l'une des revendications 1 à 11, caractérisé en ce que la pièce d'appui (9) est telle qu'elle vient en contact mécanique avec les fibres optiques (11) sans être en contact avec les bords de la première rainure en forme de V et en ce qu'il comporte un dispositif appliquant une force calibrée sur les fibres.

14. Dispositif selon la revendication 13, caractérisé en ce que la pièce d'appui (9) comporte une face extérieure cylindrique d'axe confondu avec l'axe de symétrie des fibres.

15. Dispositif selon l'une des revendications 13 ou 14, caractérisé en ce que la force calibrée est inférieure ou égale à 500 grammes pour une pièce d'appui de longueur 20 mm.

## Claims

1. Device for mounting optical fibres (11) in a connector (2) and comprising a base (1) including a means (5) for disposing the connector in a reference position and a first V-shaped groove (3) for positioning said optical fibres as well as an engagement member (9) having two mutually inclined faces (8') and arranged to maintain the optical fibres (11) in position, characterized in that it comprises a block (10) disposed at the bottom of the first V-shaped groove (3) such that it delimits first and second troughs, each having a V-shaped cross-section (19), each being adapted to receive at least one optical fibre (11), and in that the engagement member (9) is such that it is adapted to mechanically contact the optical fibres (11) without contacting said block (10) provided that the eventual deformation of the optical fibres be sufficiently small, in order to ensure the desired preciseness in positioning the fibres within the connector.

2. Device according to claim 1, characterized in that said block (10) is of a square cross-section.

3. Device according to claim 2, characterized in that said block (10) is provided with a chamfered face (17) disposed on the side opposite to the bottom of the V.

4. Device according to claim 1, characterized in that said calibrated block is a cylindrical pin (27).

5. Device according to any of the preceding claims, characterized in that the first and second V-shaped troughs (19) receive, respectively, second and third blocks (41) such as to delimit a group of four secondary V-shaped troughs, each being adapted to receive an optical fibre (11).

6. Device according to claim 5, characterized in that at least one of the second and third blocks (41) is a cylindrical pin.

7. Device according to any of the preceding claims, characterized in that the internal face of the engagement member (9) which contact the fibres is divided by at least one trough in order to form separated regions (12), each corresponding to at least one optical fibre to be positioned.

8. Device according to claim 4 or claim 6, in combination with claim 7, characterized in that the engagement member (9) comprises a central region (40) corresponding to two optical fibres disposed within two secondary central troughs, and two lateral regions (42) each corresponding to an optical fibre (11) disposed within a secondary lateral trough.

9. Device according to claim 7 or claim 8, characterized in that at least one region (12, 40, 42) is in the shape of a triangle having a flat top arranged at the level of at least one optical fibre (11).

10. Device according to any of the preceding claims, characterized in that it is arranged such that the optical fibres (11) are positioned in a same plane.

11. Device according to any of the preceding claims, characterized in that the means for disposing the connector in a reference position is a second V-shaped groove (5), the bottom of which is offset with respect to the bottom of the first V-shaped groove (3).

12. Device according to any of the preceding claims, characterized in that the engagement member (9) is arranged such as to be in mechanical contact with the edges of the first V-shaped groove (3).

13. Device according to any of claims 1 to 11, characterized in that the engagement member (9) is arranged such as to be in mechanical contact with the optical fibres (11) without contacting the edges of the first V-shaped groove and in that it comprises a device for exerting a calibrated force on the fibres.

14. Device according to claim 13, characterized in that the engagement member (9) comprises a cylindrical external face having an axis concentric with the axis of symmetry of the fibres.

15. Device according to claim 13 or claim 14, characterized in that the calibrated force is smaller than or equal to 500 g for an engagement member of a length of 20 mm.

**Patentansprüche**

1. Vorrichtung zur Montage von Lichtleitfasern (11) in einem Anschlußteil (2), mit einer Basis (1), die versehen ist mit einem Mittel (5) zum Anordnen des Anschlußteils in einer Bezugsstellung und einer V-förmigen ersten Nut (3) zum Positionieren der Lichtleitfasern sowie einem Halteteil (9) mit zwei Flächen (8'), die zueinander geneigt sind und dazu dienen, die Lichtleitfasern (11) in ihrer Lage zu halten, dadurch gekennzeichnet, daß sie ein Unterlegteil (10) aufweist, das am Boden der V-förmigen ersten Nut (3) so angeordnet ist, daß sie eine erste und eine zweite Rinne von jeweils V-förmigem Querschnitt (19) begrenzt, wobei jede mindestens eine Lichtleitfaser (11) aufnehmen kann, und daß das Halteteil (9) so ausgebildet ist, daß es mit den Leitfasern (11) in mechanische Berührung treten kann, ohne das Unterlegteil (10) zu berühren, vorausgesetzt, die eventuelle Verformung der Lichtlietfasern ist ausreichend gering, um die gewünschte Lagegenauigkeit der Lichtleitfasern im Anschlußteil zu gewährleisten.

2. Vorrichtung nach Anspruch 1, dadurch gekennzeichnet, daß das Unterlegteil (10) einen quadratischen Querschnitt hat.

3. Vorrichtung nach Anspruch 2, dadurch gekennzeichnet, daß das Unterlegteil (10) mit einer abgefasten Anschlagfläche (17) versehen ist, die auf der dem Boden des V gegenüberliegenden Seite angeordnet ist.

4. Vorrichtung nach Anspruch 1, dadurch gekennzeichnet, daß das kalibrierte Unterlegteil ein zylindrischer Stift (27) ist.

5. Vorrichtung nach einem der vorhergehenden Ansprüche, dadurch gekennzeichnet, daß die erste und die zweite V-förmige Rinne (19) ein zweites bzw. drittes Unterlegteil (41) aufnehmen, derart, daß sie eine Gruppe von vier sekundären V-förmigen Rinnen begrenzen, die jeweils eine optische Faser (11) aufnehmen können.

6. Vorrichtung nach Anspruch 5, dadurch gekennzeichnet, daß von dem zweiten und dritten Unterlegteil (41) mindestens eines ein zylindrischer Stift ist.

7. Vorrichtung nach einem der vorhergehenden Ansprüche, dadurch gekennzeichnet, daß die die Lichtleitfasern berührende Innenfläche des Halteteils (9) durch mindestens eine Rinne unterteilt ist, um getrennte Bereiche (12) zu bilden, von denen jeder mindestens einer zu positionierenden Lichtleitfaser entspricht.

8. Vorrichtung nach Anspruch 5 oder 6 in Verbindung mit Anspruch 7, dadurch gekennzeichnet, daß das Halteteil (9) einen zentralen Bereich (40) und zwei seitliche Bereiche (42) aufweist, von denen der zentrale Bereich zwei Lichtleitfasern entspricht, die in zwei zentralen sekundären Rinnen angeordnet sind, und von denen die beiden seitlichen Bereiche jeweils einer Lichtleitfaser (11) entsprechen, die in einer seitlichen sekundären Rinne angeordnet ist.

9. Vorrichtung nach Anspruch 7 oder 8, dadurch gekennzeichnet, daß mindestens ein Bereich (12, 40, 42) die Form eines Dreiecks hat, dessen abgestumpfte Spitze auf Höhe mindestens einer Lichtleitfaser (11) liegt.

10. Vorrichtung nach einem der vorhergehenden Ansprüche, dadurch gekennzeichnet, daß sie so ausgebildet ist, daß die Lichtleitfasern (11) in der gleichen Ebene liegen.

11. Vorrichtung nach einem der vorhergehenden Ansprüche, dadurch gekennzeichnet, daß das Mittel zum Anordnen des Anschlußteils in einer Bezugslage eine zweite V-förmige Nut ist, deren Boden bezüglich des Bodens der ersten V-förmigen Nut (3) versetzt ist.

12. Vorrichtung nach einem der vorhergehenden Ansprüche, dadurch gekennzeichnet, daß das Halteteil (9) so ausgebildet ist, daß es mit den Rändern der ersten V-förmigen Nut (3) in mechanischer Berührung steht.

13. Vorrichtung nach einem der Ansprüche 1 bis 11, dadurch gekennzeichnet, daß das Halteteil (9) so ausgebildet ist, daß es mit den Lichtleitfasern (11) in mechanischer Berührung steht, ohne die Ränder der ersten V-förmigen Nut zu berühren, und daß sie eine Vorrichtung aufweist, die eine vorgegebene Kraft auf die Lichtleitfasern ausübt.

14. Vorrichtung nach Anspruch 3, dadurch gekennzeichnet, daß das Halteteil (9) eine zylindrische Außenfläche aufweist, deren Achse mit der Symmetrieachse der Lichtleitfasern zusammenfällt.

15. Vorrichtung nach Anspruch 13 oder 14, dadurch gekennzeichnet, daß die vorgegebene Kraft kleiner oder gleich 500 g für ein Halteteil einer Länge von 20 mm ist.

0 107 989

FIG_1-a

FIG_1-b

FIG_1-c

FIG_1-d

FIG_2·a

FIG_2·b

FIG_3·a

FIG_3·b

# FIG_4

# FIG_5